# EUROPEAN PATENT APPLICATION

(11) **EP 2 706 256 A2**
(43) Date of publication of application: **12.03.2014**
(21) Application number: 12781591.8
(22) Date of filing: 07.05.2012
(51) Int. Cl.: F16F 9/12, F16F 9/14

(54) **ROTARY TYPE DAMPER**

(30) Priority: 06.05.2011 KR 20110042888
(71) Applicant: Eversys Co., Ltd., Dongtan-myeon, Hwaseong-si Gyeonggi-do 445-812 (KR)
(72) Inventor: CHO, Yongjun, Yongin-si Gyeonggi-do 448-170 (KR)
(74) Representative: Beck & Rössig European Patent Attorneys
(86) International application number: PCT/KR2012/003549
(87) International publication number: WO 2012/153953

(57) **Abstract**

The present invention relates to a rotary type damper including a housing filled with a working fluid, a shaft penetrating inside the housing and placed in a rotatable manner, a housing pin provided on the inner circumference of the housing to reach the side of the shaft, for limiting the movement of the working fluid, and an axis pin for coupling with the shaft so as to rotate with the shaft, and closely contacting the side of the shaft and the inner circumference of the housing as the position thereof varies according to the rotating direction of the shaft. The present invention increases the durability and the period of use by minimizing the contact area between the component members and reducing abrasion during the operation, easily enables an accurate control of the working fluid, thereby eliminating the requirement for high precision in processing the component members, thus decreasing the effort and cost spent in manufacturing, enables an accurate control of the resistance of the working fluid, thereby enhancing the reliability of a damping action, and enables the control of a unidirectional damping and the rotational speed of a rotary body which is the target of damping, so as to enable an easy application to the rotary body requiring a unidirectional damping or a variation in the rotational speed.

## Description

### TECHNICAL FIELD

The present invention relates to a rotary type damper, and more particularly, to a rotary type damper, the durability and period of use of which are increased by minimizing a contact area between component members thereof and reducing abrasion of the component members during an operation, and which is capable of controlling a unidirectional damping and the rotational speed of a rotary body which is a target of damping.

### BACKGROUND ART

In general, a damper is an apparatus configured to absorb vibration energy and is also referred to as a vibration controller or a vibration absorber. Among such dampers, a rotary damper is used to gently control the rotational speed of a rotary body by applying a predetermined braking force to the rotary body when an object that is to be controlled is the rotary body.

A rotary type oil damper, the damping function of which is performed using oil among conventional rotary dampers will be described with reference to the accompanying drawings below.

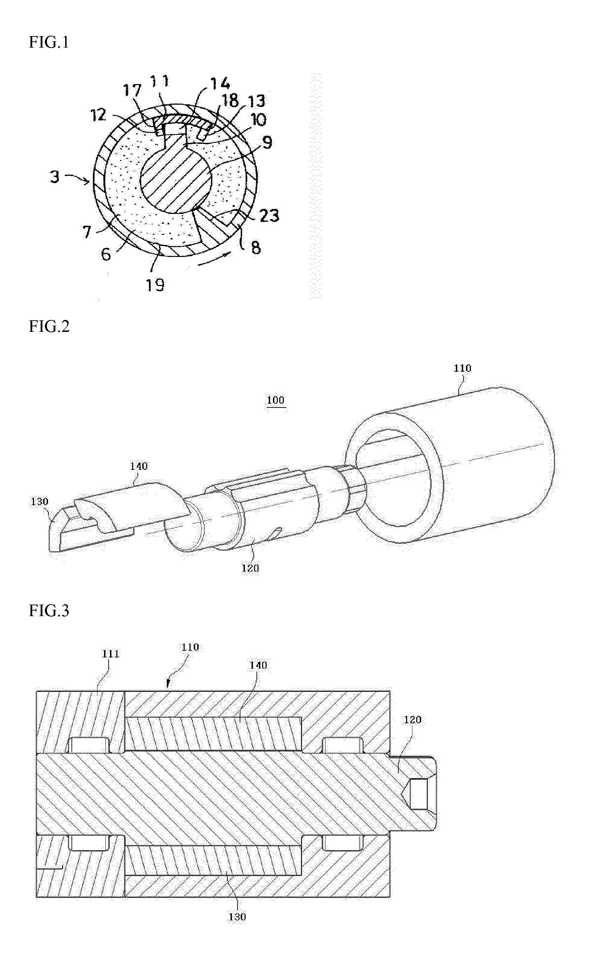

FIG. 1 is a cross-sectional view of a conventional rotary type oil damper disclosed in Korean registered patent No. 0205091 entitled "Keyboard Lid Opening and Closing Device Using Oil Damper".

As illustrated in FIG. 1, the conventional oil damper 3 includes a casing 8 including a hollow cylindrical chamber 6, one end facing a shaft of which is closed, another end of which is open, and the inside of which is filled with a viscosity fluid 7; a pivoting member (not shown) assembled to be rotatable with respect to the casing 8 and including a shaft unit 9 disposed in the chamber 6 to be rotated along a shaft line of the casing 8; a protrusion portion 10 extending in a shaft direction and along peripheral surfaces of the shaft unit 9; an movable valve 11 coupled to the protrusion portion 10 while having an opening in a rotation direction, and having a side in contact with the protrusion portion 10 in a rotation direction of the casing 8; fluid passages 12, 13, and 14 formed on an interface between the movable valve 11 and the protrusion portion 10 and one side and another side of the movable valve 11, respectively, to cause the viscosity fluid 7 having a different resistance to pass through the movable valve 11 as the casing 8 and the pivoting member (not shown) rotate relatively to each other; and a sealing member (not shown) including, for example, an O-shaped ring installed between the casing 8 and the pivoting member (not shown) to seal the viscosity fluid 7.

The casing 8 is installed on a place to which the oil damper 3 is applied by tightening screw. More specifically, the movable valve 11 is formed such that a cross section thereof actually has a channel shape. The distance between vertical walls 17 and 18 which are both ends of the movable valve 11 in terms of a rotation direction thereof is actually greater than the width of the protrusion portion 10 in terms of a rotation direction thereof. The movable valve 11 has the opening in the rotation direction thereof, is placed on the protrusion portion 10, and may be moved in a sliding manner to contact a surface of an inner wall 19 of the casing 8. The fluid passages 12 and 13 are actually formed on the vertical walls 17 and 18 of the movable valve 11, respectively, and the fluid passage 14 is formed by partially cutting the protrusion portion 10. A stopper 23 extends in the shaft direction and is installed on the inner wall 19 of the chamber 6.

In the conventional rotary type oil damper 3 described above, when the casing 8 starts to rotate in a direction indicated by an arrow, i.e., a counterclockwise direction, the movable valve 11 is rotated by the viscosity fluid 7 as the stopper 23 rotates, thereby causing the vertical wall 18 to contact the protrusion portion 10. Consequently, the viscosity fluid 7 flows from the fluid passage 13, passes through the fluid passage 14, and then flows in a direction of the opening between the vertical wall 17 and the protrusion portion 10, thereby decreasing a resistance of the viscosity fluid 7.

Also, when the casing 8 starts to rotate in a direction opposite to the direction indicated by the arrow, i.e., a clockwise direction, while the stopper 23 is in a fully open state in which the stopper 23 contacts the protrusion portion 10 via the movable valve 11, the vertical wall 17 of the movable valve 11 consequently contacts the protrusion portion 10. In this case, the viscosity fluid 7 flows in the fluid passage 12 having a small cross section, thus generating a very high resistance.

However, in the conventional rotary type oil damper, the component members are likely to abrade during an operation due to a surface contact between the component members, thereby decreasing the durability and period of use.

Also, in the conventional rotary type oil damper, a working fluid is difficult to be accurately controlled and the component members are thus required to be highly precisely processed, thereby increasing the efforts and costs to manufacture the conventional rotary type oil damper 3.

Also, in the conventional rotary type oil damper, not only a mechanism configured to generate a resistance of the working fluid is complicated but also accurately controlling the resistance of the working fluid is limited during an operation, thereby lowering the reliability of a damping action.

Also, the conventional rotary type oil damper is not capable of controlling a unidirectional damping and the rotational speed of a rotary body which is a target of damping, and is thus not applicable to a rotary body that requires a unidirectional damping or a variable rotational speed.

### DETAILED DESCRIPTION OF THE INVENTION

### TECHNICAL PROBLEM

The present invention provides a rotary type damper, the durability and period of use of which are increased by minimizing a contact area between component members thereof to decrease abrasion of the component members during an operation.

The present invention also provides a rotary type damper which is capable of accurately controlling a working fluid and does thus not require to highly precisely process the component members thereof, thereby reducing the efforts and costs to manufacture the rotary type damper.

The present invention also provides a rotary type damper capable of accurately controlling a resistance of the working fluid, thereby improving the reliability of a damping action.

The present invention also provides a rotary type damper which is capable of controlling a unidirectional damping and a rotational speed of a rotary body which is a target of damping and is thus easily applicable to a rotary body that requires a unidirectional damping or a variable rotational speed.

Additional aspects of the present invention will be set forth in part in the description which follows and, in part, will be apparent from the description, or may be learned by practice of the presented embodiments.

### TECHNICAL SOLUTION

According to an aspect of the present invention, there is provided a rotary type damper including a housing filled with a working fluid; a shaft installed to be rotatable while passing through the inside of the housing; a housing pin placed on an inner circumference of the housing to reach a side of the shaft, and configured to limit the movement of the working fluid; and an axis pin coupled to the shaft to rotate together with the shaft, and closely contacting the side of the shaft and the inner circumference of the housing as the position of the axis pin varies according to a rotation direction of the shaft.

The axis pin may be coupled to the side of the shaft such that the axis pin rotates in opposite directions according to the rotation direction of the shaft and a resistance between the axis pin and the working fluid thereby.

Both sides of the axis pin may closely contact the side of the shaft and the inner circumference of the housing, respectively, according to the resistance of the working fluid, with respect to the center of the axis pin.

The axis pin may be meshed with the shaft in a circumferential direction of the shaft while having a clearance with the shaft.

A first insertion groove having a curvature may be formed in one of a side of the axis pin and a side of the shaft, and a first insertion projection having a curvature may be formed on the other to be inserted into the first insertion groove.

A pair of first insertion grooves and a pair of first insertion projections may be formed in parallel at a predetermined interval.

Linear contact portions may be formed at both sides of the axis pin to cause the axis pin to linearly contact the inner circumference of the housing when the axis pin closely contacts the inner circumference of the housing.

Both side surfaces of the axis pin may be formed to be inclined with respect to a radius of rotation of the shaft.

A resistance decrease groove may be formed in the axis pin to allow the working fluid therethrough when the shaft rotates only in one direction.

The resistance decrease groove may be formed in a side of a surface of the axis pin facing the inner circumference of the housing.

A friction decrease groove may be formed in the surface of the axis pin facing the inner circumference of the housing in a lengthwise direction to be connected to the resistance decrease groove.

The housing pin may be installed on the housing such that the position of the housing pin varies according to the rotation direction of the shaft and a resistance of the working fluid thereby, and to cause the housing pin to closely contact the side of the shaft and the inner circumference of the housing.

The housing pin may be meshed with the inner circumference of the housing in a circumferential direction of the housing while having a clearance with the housing.

A second insertion groove having a curvature may be formed in one of the housing pin and the inner circumference of the housing, and a second insertion projection having a curvature may be formed on the other to be inserted into the second insertion groove.

The housing pin may be shaft-coupled to a bottom surface of the housing to be rotatable with respect to the bottom surface of the housing.

Linear contact portions may be formed at both sides of a portion of the housing pin facing the shaft to cause the housing pin to linearly contact the shaft when the housing pin closely contacts the shaft.

Both side surfaces of the housing pin may be formed to be inclined with respect to the radius of rotation of the shaft.

### ADVANTAGEOUS EFFECTS

The durability and period of use of a rotary type damper according to the present invention may be increased by minimizing a contact area between component members thereof to decrease abrasion of the component members during an operation. Also, the rotary type damper is capable of accurately controlling a working fluid and thus does not require a high precision and accuracy to process the component members, thereby reducing the efforts and costs to manufacture the rotary type damper. Also, the rotary type damper is capable of accurately controlling a resistance of the working fluid to improve the reliability of a damping action and controlling a unidirectional damping and a rotational speed of a rotary body which is a target of damping, and is thus easily applicable to a rotary body that requires a unidirectional damping or a variable rotational speed.

### DESCRIPTION OF THE DRAWINGS

FIG. 1 is a cross-sectional view of a conventional rotary type oil damper,
FIG. 2 is an exploded perspective view of a rotary type damper according to a first embodiment of the present invention,
FIG. 3 is a side cross-sectional view of the rotary type damper according to the first embodiment of the present invention,
FIG. 4 is an enlarged view of main parts of the rotary type damper of FIG. 3,
FIG. 5 is a perspective view of the rotary type damper according to the first embodiment of the present invention,
FIG. 6 is a plan view of a state in which an axis pin is closed in the rotary type damper according to the first embodiment of the present invention,
FIG. 7 is an enlarged plan view of main parts of the rotary type damper of FIG. 6,
FIG. 8 is a plan view of another state in which the axis pin is closed in the rotary type damper according to the first embodiment of the present invention,
FIG. 9 is an enlarged plan view of main parts of the rotary type damper of FIG. 8,
FIGS. 10 and 11 are plan views illustrating an operation of a housing pin of the rotary type damper according to the first embodiment of the present invention,
FIG. 12 is a plan view of various examples of the housing pin of the rotary type damper according to the first embodiment of the present invention,
FIG. 13 is an exploded perspective view of a rotary type damper according to a second embodiment of the present invention,
FIGS. 14 to 16 are plan views of states in which an axis pin is closed in the rotary type damper according to the second embodiment of the present invention,
FIG. 17 is an enlarged plan view of main parts of the rotary type damper in which the axis pin is closed in the rotary type damper according to the second embodiment of the present invention,
FIGS. 18 to 20 are plan views of states in which the axis pin is open in the rotary type damper according to the second embodiment of the present invention, and
FIG. 21 is an enlarged plan view of main parts of the rotary type damper in which the axis pin is open according to the second embodiment of the present invention.

### BEST MODE

The present invention may be embodied in different forms and in various embodiments. Thus, exemplary embodiments of the present invention will be illustrated in the drawings and described in detail below. However, the present invention is not limited to the embodiments set forth herein. It would be obvious to those of ordinary skill in the art that the above exemplary embodiments are to cover all modifications, equivalents, and alternatives falling within the scope of the invention. Accordingly, it will be understood that various changes in form and details may be made therein without departing from the spirit and scope of the following claims.

Hereinafter, exemplary embodiments of the present invention will be described in detail with reference to the accompanying drawings. The same or corresponding component members are assigned the same reference numerals and are not redundantly described herein.

FIG. 2 is an exploded perspective view of a rotary type damper 100 according to a first embodiment of the present invention. FIG. 3 is a side cross-sectional view of the rotary type damper 100 according to the first embodiment of the present invention.

As illustrated in FIGS. 2 and 3, the rotary type damper 100 according to the first embodiment may include a housing 110 filled with a working fluid 1, a shaft 120 installed in the housing 110, a housing pin 130 placed on an inner circumference of the housing 110, and an axis pin 140 placed on the shaft 120 such that the position thereof is variable. Examples of a rotary body which is a target of damping include various doors, various robot arms, various wheels, various rotary mechanisms, various rotation members, various rotation devices, etc. Here, the working fluid 1 may be one of various viscosity fluids such as oil.

The inside of the housing 110 is filled with the working fluid 1 such that the working fluid 1 does not leak to the outside. A cap 111 is coupled to a side of the housing 110 to be detachable so that the inside of the housing 110 may be opened. A sealing member may be interposed between a portion of the housing 110 and a portion of the cap 111 that are coupled to each other so as to air-tightly seal the housing 110, and may be fixed on, for example, a supporting structure for supporting the rotary body directly or via a bracket or an additional member.

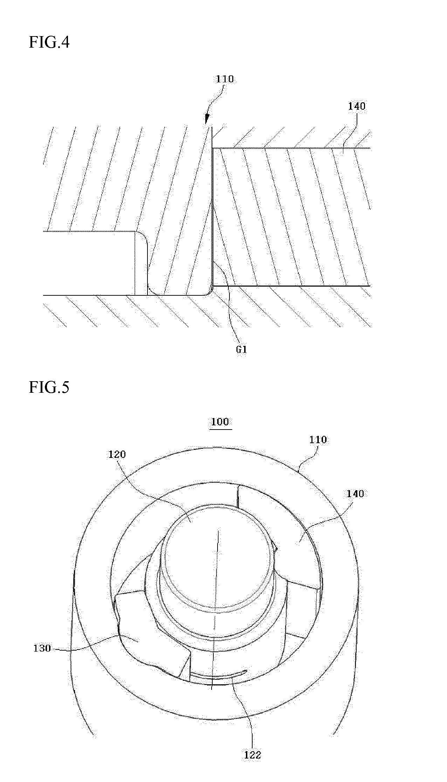

As illustrated in FIG. 4, the housing 110 may have a gap G1 allowing the flow of the working fluid 1, caused by a tolerance between an inner side of the housing 110 and the housing pin 130 illustrated in FIG. 3 or between the inner side of the housing 110 and the axis pin 140 or processing a portion between the inner side of the housing 110 and the housing pin 130 illustrated in FIG. 3 or between the inner side of the housing 110 and the axis pin 140. Thus, the working fluid 1 may pass through the housing 130 and the axis pin 140 via the gap G1. The size of the gap G1 may vary according to damping characteristics.

In the housing 110, the working fluid 1 may travel between both spaces defined by the housing pin 130 and the axis pin 140 regardless of the housing pin 130 and the axis pin 140 by forming a groove in a surface of the inner side of the housing 110, forming a groove in an outer circumference of the shaft 120, forming a hole to pass through the shaft 120, or using a tolerance between the component members, e.g., an assembling tolerance of the housing 110, the shaft 120, the housing pin 130, and the axis pin 140. Such a flow of the working fluid 1 may also be applied to all other embodiments, and one or a plurality of methods among the above methods may be used. When the movement of the working fluid 1 is allowed to bypass the housing pin 130 by forming a fluid path groove 122 in the outer circumference of the shaft 120, the rotational speed of the shaft 120 such as the rotary body may be easily controlled using a change in the cross-sectional area or specifications of the fluid path groove 122.

The shaft 120 is installed to be rotatable while passing through the inside of the housing 110, and one end or both ends of the shaft 120 may be exposed to or protrude from the housing 110, thereby fixing the rotary body which is the target of damping. Thus, the rotary type damper 100 is configured to absorb rotational energy generated by a rotational movement of the rotary body. The rotary body may be returned to the original position by a restoring member such as a spring, and the rotary type damper 100 may absorb the rotational energy when the rotary body is returned to the original position.

The shaft 120 may be installed in the housing 110 to be rotatable by the medium of a bearing, and a sealing member may be installed in a contact area between the shaft 120 and the housing 110.

Meanwhile, the rotation of the shaft 120 means rotation of the shaft 120 relative to the housing 110 and may be applied throughout the present disclosure. Thus, the shaft 120 may function as a fixed shaft to fix the rotary body into the housing 110.

The housing pin 130 is placed on the inner circumference of the housing 110 so that the housing pin 130 may reach a side of the shaft 120 to limit the movement of the working fluid 1. Here, the limiting of the movement of the working fluid 1 includes not only completely blocking the movement of the working fluid 1 via the housing pin 130 but also allowing a minute movement of the working fluid 1 through a clearance between the housing pin 130 and the shaft 120. Thus, in rotary type dampers according to the present embodiment and a subsequent embodiment, the housing pin 130 and the axis pin 140 are configured to completely block the movement of the working fluid 1 but allow the minute movement of the working fluid 1 as described above with respect to the limiting of the movement of the working fluid 1, thereby allowing the rotation of the shaft 120.

As illustrated in FIGS. 5 to 9, the axis pin 140 is coupled to the shaft 120 so that the axis pin 140 may be rotated together with the shaft 120, and the position of the axis pin 140 may vary according to a rotation direction of the shaft 120. Thus, the axis pin 140 may closely contact a side of the shaft 120 and the inner circumference of the housing 110.

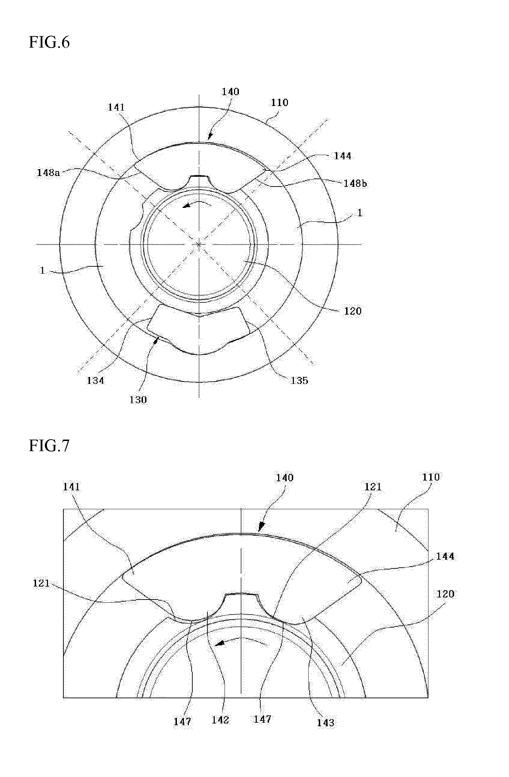

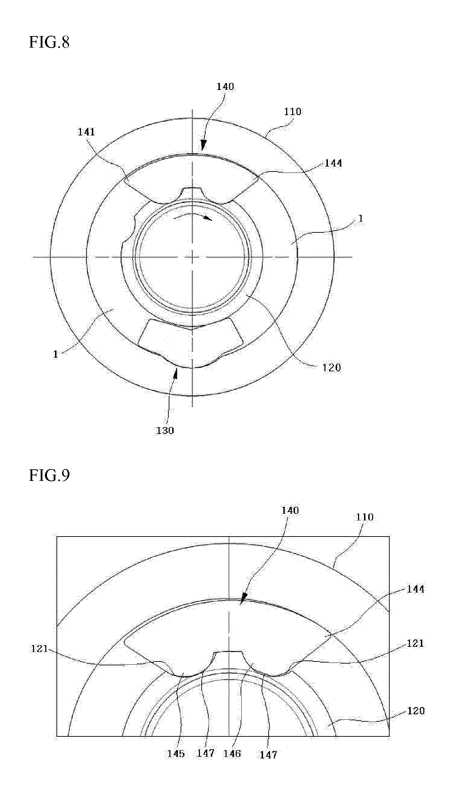

Otherwise, the axis pin 140 may be coupled to a side of the shaft 120 so that the axis pin 140 may rotate in a direction opposite to the rotation direction of the shaft 120 due to a resistance between the axis pin 140 and the working fluid 1. For example, when the shaft 120 rotates in a counterclockwise direction as illustrated in FIG. 6, the axis pin 140 is moved in a direction while rotating due to a resistance of the working fluid 1 to cause contact portions 141, 142, and 143 to closely contact the inner circumference of the housing 110 and the side of the shaft 120, thereby suppressing the movement of the working fluid 1 as illustrated in FIG. 7. When the shaft 120 rotates in a clockwise direction as illustrated in FIG. 8, the axis pin 140 is moved in a direction opposite to the clockwise direction while rotating due to the resistance of the working fluid 1 to cause other contact portions 144, 145, and 146 to closely contact the inner circumference of the housing 110 and the side of the shaft 120, thereby suppressing the movement of the working fluid as illustrated in FIG. 9.

As in the present embodiment, the linear contact portions 141 and 144 among the contact portions 141 to 146 may be formed at both ends of the axis pin 140 to cause the axis pin 140 to linearly contact the inner circumference of the housing 110 when the axis pin 140 closely contacts the inner circumference of the housing 110. The linear contact portions 141 and 144 may each have any of various shapes to linearly contact the inner circumference of the housing 110, and reduces abrasion of the axis pin 140 when the axis pin 140 contacts the inner circumference of the housing 110 and makes it easy to manufacture the axis pin 140. The axis pin 140 may be shaped such that the contact portions 142, 143, 145, and 146 except the linear contact portions 141 and 144 linearly contact the side of the shaft 120.

A side of the axis pin 140 facing the inner circumference of the housing 110 may be formed to have a curvature that is same as or similar to that of the housing 110, but is not limited thereto and may have any of other various shapes.

As in the present embodiment, both sides of the axis pin 140 may closely contact the side of the shaft 120 and the inner circumference of the housing 110, respectively, with respect to the center of the axis pin 140, e.g., a radius of rotation passing through the center of the axis pin 140, according to the resistance of the working fluid 1. In this case, the both sides of the axis pin 140 may be symmetric to each other with respect to the center of the axis pin 140. Otherwise, the both sides of the axis pin 140 may be formed to be asymmetric to each other.

As illustrated in FIGS. 7 and 9, the axis pin 140 may be meshed with the shaft 120 along a circumferential direction of the shaft 120 while having a clearance with the shaft 120. To this end, for example, a first insertion groove 121 having a curvature may be formed in one of a side of the axis pin 140 and a side of the shaft 120, and a first insertion projection 147 having a curvature may be formed on the other side to be inserted into the first insertion groove 121. In the present embodiment, the first insertion groove 121 is formed into the shaft 120 and the first insertion projection 147 is formed on the axis pin 140, but the present invention is not limited thereto and the locations of the first insertion groove 121 and the first insertion projection 147 may be switched to each other.

The number of each of the first insertion groove 121 and the first insertion projection 147 may be one or more than one. Alternatively, as in the present embodiment, a pair of insertion grooves 121 and a pair of insertion projections 147 may be formed in parallel at a predetermined interval so that the axis pin 140 may stably rotate with respect to the shaft 120 to change the position thereof.

As illustrated in FIG. 6, both side surfaces 148a and 148b of the axis pin 140 may be formed to be inclined with respect to the radius of rotation of the shaft 120 so that the axis pin 140 may be easily moved while rotating by pressure of the working fluid 1.

The housing pin 130 may protrude from the inner circumference of the housing 110 to be integrally formed with the housing 110. Otherwise, as in the present embodiment, the housing pin 130 may be formed separately from the housing 110 and installed on the housing 110. For example, the housing pin 130 may be installed on the housing 110, e.g., the inner circumference of the housing 110, to closely contact a side of the shaft 120 and the inner circumference of the housing 110 as the position of the housing pin 130 may vary according to the rotation direction of the shaft 120 and the resistance of the working fluid 1.

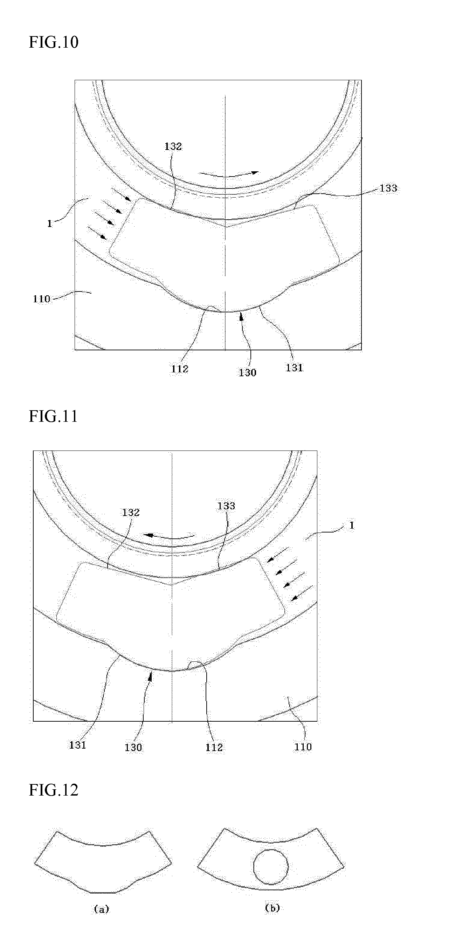

As illustrated in FIGS. 10 and 11, the housing pin 130 may be meshed with the inner circumference of the housing 110 in the circumferential direction of the housing 110 while having a clearance with the housing 110. For example, a second insertion groove 112 having a curvature may be formed in one of the housing pin 130 and the inner circumference of the housing 110, and a second insertion projection 131 having a curvature may be formed on the other to be inserted into the second insertion groove 112. Here, as in the present embodiment, the second insertion projection 131 may be formed on the housing pin 130 and the second insertion groove 112 may be formed in the inner circumference of the housing 110, but the present invention is not limited thereto and the locations of the second insertion projection 131 and the second insertion groove 112 may be switched to each other.

Both sides of the housing pin 130 may be formed to be symmetric to each other as in the present invention or may be formed to be asymmetric to each other. Otherwise, as illustrated in FIGS. 12(a) and (b), the housing pin 130 may have various shapes. Referring to FIG. 12(b), the housing pin 130 may be shaft-coupled to a bottom surface of the housing 110 by forming a shaft hole, a shaft groove, or a shaft thereon so that the housing pin 130 may rotate with respect to the bottom surface of the housing 110.

Linear contact portions 132 and 133 may be formed at both sides of a portion of the housing pin 130 facing the shaft 120 so that the housing pin 130 may linearly contact the shaft 120 when the housing pin 130 closely contacts the shaft 120. Here, each of the linear contact portions 132 and 133 may be in a linear shape as in the present embodiment but may be in a curved shape or a combination of linear and curved shapes. Thus, when the shaft 120 rotates in the counterclockwise direction as illustrated in FIG. 6, the housing pin 130 is rotated or is moved while rotating in one direction by the pressure of the working fluid 1 compressed by the axis pin 140 as illustrated in FIG. 10. Thus, the linear contact portion 132 at one side of the housing pin 130 comes in close contact with the inner circumference of the shaft 120, and the second insertion projection 131 comes in close contact with the inside of the second insertion groove 112, thereby preventing the working fluid 1 from being moved by the housing pin 130. Also, when the shaft 120 rotates in the clockwise direction as illustrated in FIG. 8, the housing pin 130 is rotated or is moved while rotating in another direction by the pressure of the working fluid 1 compressed by the axis pin 140 as illustrated in FIG. 11. Thus, the linear contact portion 133 at another side of the housing pin 130 comes in close contact with the inner circumference of the shaft 120 and the second insertion projection 131 comes in close contact with the inside of the second insertion groove 112, thereby preventing the working fluid 1 from being moved by the housing pin 130.

Both side surfaces 134 and 135 of the housing pin 130 may be formed to be inclined with respect to the radius of rotation of the shaft 120 as illustrated in FIG. 6. Thus, a moment may be easily applied onto the housing pin 130 to rotate or to make a rotation motion by the pressure of the working fluid 1.

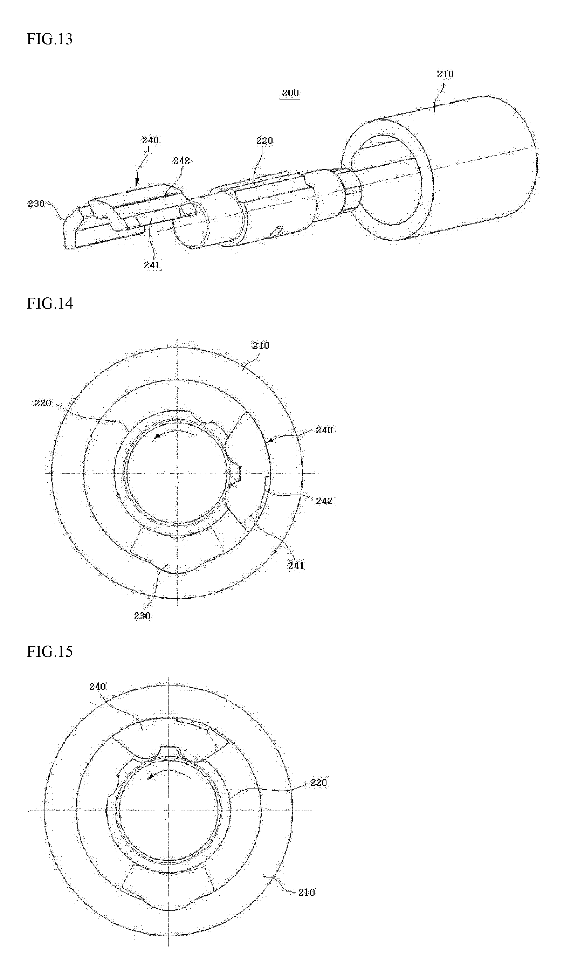

FIG. 13 is an exploded perspective view of a rotary type damper 200 according to a second embodiment of the present invention. FIG. 14 is a plan view of the rotary type damper 200 according to the second embodiment of the present invention.

As illustrated in FIGS. 13 and 14, the rotary type damper 200 according to the second embodiment may include a housing 210, a shaft 220, a housing pin 230, and an axis pin 240, like the rotary type damper 100 according to the first embodiment. The rotary type damper 200 according to the second embodiment is different from the rotary type damper 100 according to the first embodiment in that a resistance decrease groove 241 is formed in the axis pin 240 so that a working fluid is allowed to pass through the axis pin 240 when the shaft 220 rotates only in one direction. Thus, in the rotary type damper 200 according to the second embodiment, the working fluid is prevented from moving in one of both directions by the axis pin 240 and is allowed to move only in the other direction, thereby enabling a unidirectional damping.

The resistance decrease groove 241 may be formed in various locations on the axis pin 240 and in various shapes to allow the working fluid to move in only one direction. For example, the resistance decrease groove 241 may be formed at a side of a surface of the axis pin 240 facing an inner circumference of the housing 210.

A friction decrease groove 242 may be formed in the surface of the axis pin 240 facing the inner circumference of the housing 210 in a lengthwise direction to be connected to the resistance decrease groove 241. Thus, a contact area between the axis pin 240 and the inner circumference of the housing 210 may be minimized to reduce a friction between the axis pin 240 and the housing 210.

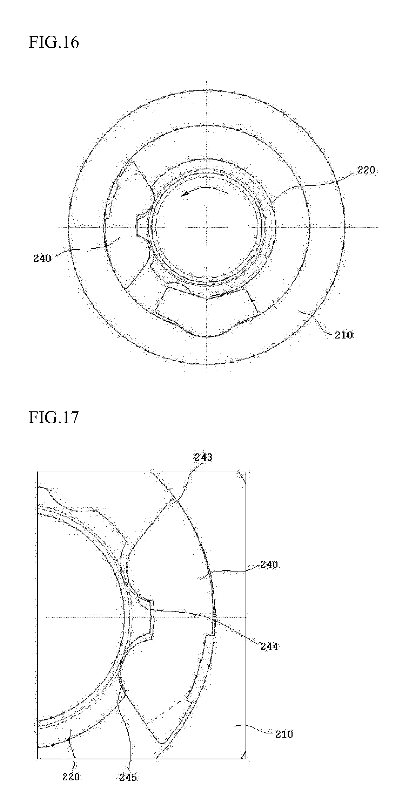

When the shaft 220 rotates in the counterclockwise direction as illustrated in FIGS. 14 to 16, contact portions 243, 244, and 245 of the axis pin 240 closely contact the inner circumference of the housing 210 and an outer circumference of the shaft 220, thereby preventing the working fluid from being moved due to the axis pin 240 as illustrated in FIG. 17, like the axis pin 140 of the rotary type damper 100 according to the first embodiment.

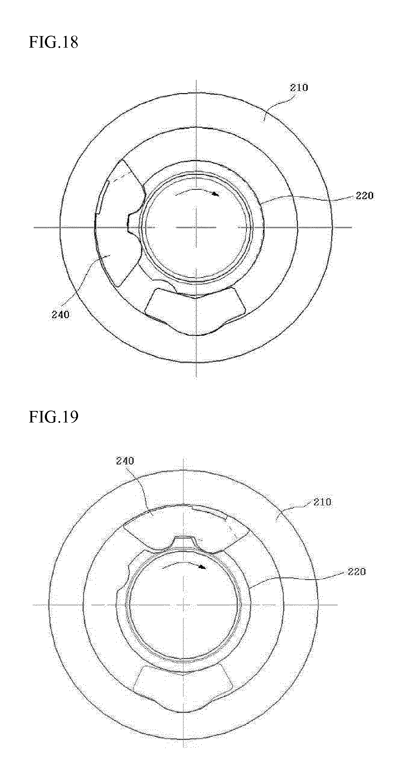

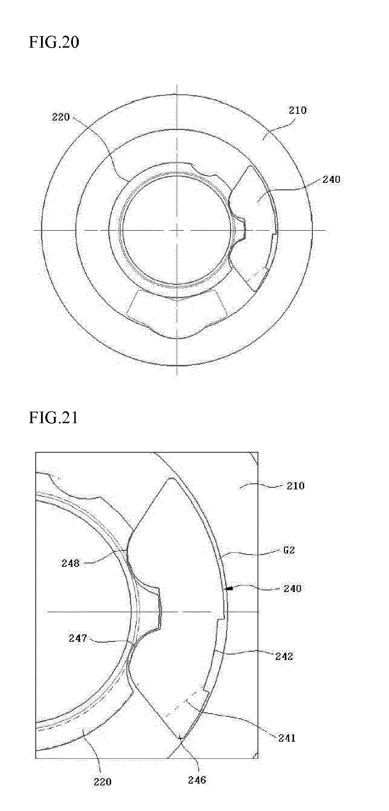

In contrast, when the shaft 220 rotates in the clockwise direction as illustrated in FIGS. 18 to 20, other contact portions 246, 247, and 248 of the axis pin 240 closely contact the inner circumference of the housing 210 and the outer circumference of the shaft 220, like the rotary type damper 100 according to the first embodiment, but the working fluid may pass through a gap G2 formed between the axis pin 240 and the inner circumference of the housing 210 via the resistance decrease groove 241 since the resistance decrease groove 241 is formed near the contact portion 246 contacting the inner circumference of the housing 210, thereby reducing or suppressing a damping action.

Although a few embodiments of the present invention have been shown and described with reference to the accompanying drawings, it would be appreciated by those of ordinary skill in the art that changes may be made in these exemplary embodiments without departing from the principles and spirit of the invention, the scope of which is defined in the claims and their equivalents.

### MODE OF THE INVENTION

According to one aspect of the present invention, there is provided a rotary type damper including a housing filled with a working fluid; a shaft installed to be rotatable while passing through the inside of the housing; a housing pin placed on an inner circumference of the housing to reach a side of the shaft, and configured to limit the movement of the working fluid; and an axis pin coupled to the shaft to rotate together with the shaft, and closely contacting the side of the shaft and the inner circumference of the housing as the position of the axis pin varies according to a rotation direction of the shaft.

The axis pin may be coupled to the side of the shaft such that the axis pin rotates in opposite directions according to the rotation direction of the shaft and a resistance between the axis pin and the working fluid.

Both sides of the axis pin may closely contact the side of the shaft and the inner circumference of the housing, respectively, according to the resistance of the working fluid, with respect to the center of the axis pin.

The axis pin may be meshed with the shaft in a circumferential direction of the shaft while having a clearance with the shaft.

A first insertion groove having a curvature may be formed in one of a side of the axis pin and a side of the shaft, and a first insertion projection having a curvature may be formed on the other to be inserted into the first insertion groove.

A pair of first insertion grooves and a pair of first insertion projections may be formed in parallel at a predetermined interval.

Linear contact portions may be formed at both sides of the axis pin to cause the axis pin to linearly contact the inner circumference of the housing when the axis pin closely contacts the inner circumference of the housing.

Both side surfaces of the axis pin may be formed to be inclined with respect to a radius of rotation of the shaft.

A resistance decrease groove may be formed in the axis pin to allow the working fluid therethrough when the shaft rotates only in one direction.

The resistance decrease groove may be formed in a side of a surface of the axis pin facing the inner circumference of the housing.

A friction decrease groove may be formed in the surface of the axis pin facing the inner circumference of the housing in a lengthwise direction to be connected to the resistance decrease groove.

The housing pin may be installed on the housing such that the position of the housing pin varies according to the rotation direction of the shaft and the resistance of the working fluid to cause the housing pin to closely contact the side of the shaft and the inner circumference of the housing.

The housing pin may be meshed with the inner circumference of the housing in a circumferential direction of the housing while having a clearance with the housing.

A second insertion groove having a curvature may be formed in one of the housing pin and the inner circumference of the housing, and a second insertion projection having a curvature may be formed on the other to be inserted into the second insertion groove.

The housing pin may be shaft-coupled to a bottom surface of the housing to be rotatable with respect to the bottom surface of the housing.

Linear contact portions may be formed at both sides of a portion of the housing pin facing the shaft to cause the housing pin to linearly contact the shaft when the housing pin closely contacts the shaft.

Both side surfaces of the housing pin may be formed to be inclined with respect to the radius of rotation of the shaft.

### INDUSTRIAL APPLICABILITY

The present invention is applicable to door hinges and fluid control devices.

### SEQUENCE LISTING FREE TEXT

1: working fluid 110, 210: housing
111: cap 112: second insertion groove
120, 220: shaft 121: first insertion groove
130, 230: housing pin 131: second insertion projection
132, 133: linear contact portion
134, 135: both side surfaces
140, 240: axis pin 141, 144: linear contact portion
142, 143, 145, 146: first and second contact portions
147: first insertion projection
148a, 148b: both side surfaces
241: resistance decrease groove
242: friction decrease groove
243, 244, 245, 246, 247, 248: contact portions

## Claims

1. A rotary type damper comprising:
a housing filled with a working fluid;
a shaft installed to be rotatable while passing the inside of the housing;
a housing pin placed on an inner circumference of the housing to reach a side of the shaft, and configured to limit movement of the working fluid; and
an axis pin coupled to the shaft to rotate together with the shaft, and closely contacting the side of the shaft and the inner circumference of the housing as the position of the axis pin varies according to a rotation direction of the shaft.

2. The rotary type damper of claim 1, wherein the axis pin is coupled to the side of the shaft such that the axis pin rotates in opposite directions according to the rotation direction of the shaft and a resistance between the axis pin and the working fluid thereby.

3. The rotary type damper of claim 2, wherein both sides of the axis pin closely contact the side of the shaft and the inner circumference of the housing, respectively, according to the resistance of the working fluid with respect to the center of the axis pin.

4. The rotary type damper of claim 1, wherein the axis pin is meshed with the shaft in a circumferential direction of the shaft while having a clearance with the shaft.

5. The rotary type damper of claim 4, wherein a first insertion groove having a curvature is formed in one of a side of the axis pin and a side of the shaft, and
a first insertion projection having a curvature is formed on the other to be inserted into the first insertion groove.

6. The rotary type damper of claim 5, wherein a pair of first insertion grooves and a pair of first insertion projections are formed in parallel at a predetermined interval.

7. The rotary type damper of one of claims 1 to 6, wherein linear contact portions are formed at both sides of the axis pin to cause the axis pin to linearly contact the inner circumference of the housing when the axis pin closely contacts the inner circumference of the housing.

8. The rotary type damper of one of claims 1 to 6, wherein both side surfaces of the axis pin are formed to be inclined with respect to a radius of rotation of the shaft.

9. The rotary type damper of one of claims 1 to 6, wherein a resistance decrease groove is formed in the axis pin to allow the working fluid therethrough when the shaft rotates only in one direction.

10. The rotary type damper of claim 9, wherein the resistance decrease groove is formed in a side of a surface of the axis pin facing the inner circumference of the housing.

11. The rotary type damper of claim 10, wherein a friction decrease groove is formed in the surface of the axis pin facing the inner circumference of the housing in a lengthwise direction to be connected to the resistance decrease groove.

12. The rotary type damper of claim 1, wherein the housing pin is installed on the housing such that the position of the housing pin varies according the rotation direction of the shaft and a resistance of the working fluid thereby, and to cause the housing pin to closely contact the side of the shaft and the inner circumference of the housing.

13. The rotary type damper of claim 12, wherein the housing pin is meshed with the inner circumference of the housing in a circumferential direction of the housing while having a clearance with the housing.

14. The rotary type damper of claim 13, wherein a second insertion groove having a curvature is formed in one of the housing pin and the inner circumference of the housing, and
a second insertion projection having a curvature is formed on the other to be inserted into the second insertion groove.

15. The rotary type damper of claim 12, wherein the housing pin is shaft-coupled to a bottom surface of the housing to be rotatable with respect to the bottom surface of the housing.

16. The rotary type damper of claim 1 or one of claims 12 to 15, wherein linear contact portions are formed at both sides of a portion of the housing pin facing the shaft to cause the housing pin to linearly contact the shaft when the housing pin closely contacts the shaft.

17. The rotary type damper of claim 1 or one of claims 12 to 15, wherein both side surfaces of the housing pin are formed to be inclined with respect to the radius of rotation of the shaft.
